# EUROPEAN PATENT APPLICATION

(11) **EP 0 797 011 A1**
(43) Date of publication of application: **24.09.1997**
(21) Application number: 97200805.6
(22) Date of filing: 18.03.1997
(51) Int. Cl.: F16B 13/06, F16B 21/04, F16B 23/00, F16B 2/04

(54) **Clamping bolt**

(30) Priority: 18.03.1996 NL 1002635
(71) Applicant: Bihca Precision B.V., 7100 AD Winterswijk (NL)
(72) Inventor: Frederiks, Jan-Willem, 7514 DS Enschede (NL); Grootenboer, Nicolaas, 7101 SJ Winterswijk (NL)
(74) Representative: de Bruijn, Leendert C.

(57) **Abstract**

The invention relates to a clamping bolt (1) for fixing a product (3) to be machined or a tool on a machine bed (5). A central pin (7) comprises a fixing element at the bottom for placing in a hole in a machine bed (5). The clamping bolt comprises a conical clamping face and a straining ring (15) which is located around the clamping face and has an inner sloping surface. A resilient element (23) is accommodated between a nut (25), located at the top of the pin (7), and the straining ring (15). The nut (25) is provided with a clamping rim (26) which extends in the radial direction beyond the peripheral edge (17) of the straining ring (15). On tightening the nut (25) against the spring pressure, the straining ring (15) is opened by the spring force of the resilient element (23) and the product or tool (3) is positioned in the radial direction with respect to the machine bed (5). On further tightening the nut (25), the clamping rim (26) is caused to engage on a shoulder of the product or tool to be positioned, such that said product or tool (3) is seated with a positive fit. A conical clamping ring (20) is accommodated between the resilient element (23) and the straining ring (15). Very accurate and reproducible positioning of the product or workpiece is possible with the aid of the invention.

## Description

The invention relates to a clamping bolt having a central pin, comprising a conical clamping face, a straining ring which is located around the clamping face and has a peripheral wall and an internal sloping surface, which straining ring is movable in the axial direction relative to the central pin, a screw thread located at the top of the pin and a nut which interacts with the screw thread, wherein a resilient element is accommodated between the nut and the straining ring and wherein the nut is provided with a clamping rim which extends radially beyond the peripheral wall of the straining ring.

A clamping bolt of this type for anchoring machines to a concrete floor is disclosed in US-A 5 042 888. The US patent describes a clamping bolt which has a central pin which is of conical construction at the bottom. The pin and the straining ring can be introduced into a hole in a concrete floor. By tightening a clamping bolt over the screw thread of the pin, the straining ring is pushed, via a spring, over the conical base of the central pin. The central pin is fixed in the axial direction by the frictional force between the outer circumference of the straining ring and the hole. As a consequence, movement of the central pin in the axial direction remains possible. Furthermore, positioning inaccuracies can arise as a result of the expansion of the straining ring at the bottom of the pin, which can assume a somewhat skew position as a result.

One aim of the present invention is to provide a clamping bolt which can be coupled rapidly to a substrate, such as, for example, a machine bed or machine baseplate, by means of which accurate positioning of a part, such as a workpiece or tool, in the fixing holes of the machine bed is possible, by means of which the positioning can be achieved with a reproducible accuracy of 5 micrometres or less and by means of which the workpiece is fixed firmly in the axial direction of the clamping bolt.

To this end, a clamping bolt according to the invention is characterised in that the central pin has a fixing element at the bottom for fixing an article to a substrate, such as a machine bed, a clamping element which is movable in the axial direction of the pin and has a clamping face which converges in the direction of the fixing element towards the centre line of the pin being accommodated between the resilient element and the straining ring. On tightening the nut, the inner sloping surface of the straining ring is first pushed by the spring pressure of the resilient element over the conical clamping face of the pin. As a result the straining ring expands in the radial direction and the tool is positioned relative to the machine bed. On further tightening of the nut, against the spring pressure of the resilient element, the clamping rim of the nut is made to engage on a shoulder of the product to be machined, which is fixed with a positive fit. By means of the clamping element according to the invention, the straining ring is expanded both over a lower peripheral edge and over an upper peripheral edge on tightening the nut. As a result a radial force is produced which is concentrated in the direction in which the tool has to be moved. The positioning force is determined by the spring constant of the resilient element. As a result of the use of the clamping element at the top rim of the straining ring, the interior sloping faces of the straining ring and the conical clamping face of the central pin can be relatively steep, so that the self-releasing effect of the clamping bolt is increased.

The position of the tool in the radial direction can be accurately adjusted with the aid of the clamping bolt according to the invention. It has been found that the reproducibility of the fixing in the radial direction is within 5 micrometres. The seating of the clamping bolt with a positive fit in the axial direction prevents the workpiece from vibrating loose during machining. The clamping bolt according to the invention can be fixed very rapidly without detracting from the positioning accuracy and the reliability of the fixing in operation.

It is pointed out that Netherlands Patent Application NL-A 9301897 describes a universal clamping bolt for fixing a product on a machine bed of, for example, a machining tool such as a milling machine. When fitting tools on a machine bed which, for example, has a grid pattern or a separate grid plate with fixing holes, an accurately reproducible positioning of the workpiece which remains constant throughout the machining is desired. To this end a fixing hole in the workpiece is positioned above a hole in the machine bed and the clamping bolt is fixed in the machine bed using the fixing element. With this arrangement the straining ring is located partially in the machine bed and partially in the fixing hole of the workpiece to be fixed. The straining ring, or expansion bush, is then tightened over the conical surface of the pin by means of a nut and as a result is expanded so that the workpiece is forced in a radial direction with respect to the pin into the correct position. As a result of the frictional force between the walls of the fixing hole in the workpiece and the outer periphery of the expansion bush, the workpiece is clamped in an axial direction against the machine bed. It has been found that the contact force between the workpiece and the machine bed in the axial direction of the clamping bolt as a result of the frictional force of the expansion bush is inadequate. The consequence of this is that, when force is applied to the workpiece, the latter can come away from the machine bed and can start to vibrate. Furthermore, the movement of the expansion bush in the axial direction is limited, which results in the fixing path which remains after positioning of the tool in an axial direction of the clamping bolt being too short to push the workpiece or a tool so that this is clamped against the machine bed. Furthermore, the contact force between the workpiece and the machine bed is appreciably reduced as a result of ambient effects, such as coolants and oil between the outer periphery of the expansion bush and the fixing hole in the workpiece.

Preferably, the fixing element of the clamping bolt according to the invention is constructed as a foot which extends radially with respect to the centre line of the pin. The clamping bolt according to the invention can in this way easily be fixed to the machine bed by turning the clamping bolt through a quarter turn. Preferably, the nut is provided with two radially protruding pins for engaging with a positioning tool. With the aid of a special key, the nut can be tightened via the pins. With the aid of said pins, the clamping bolt can likewise be removed from the machined workpiece after the machined product has been removed from the machine bed.

One embodiment of a clamping bolt according to the invention will be explained in more detail with reference to the appended drawing. In the drawing:

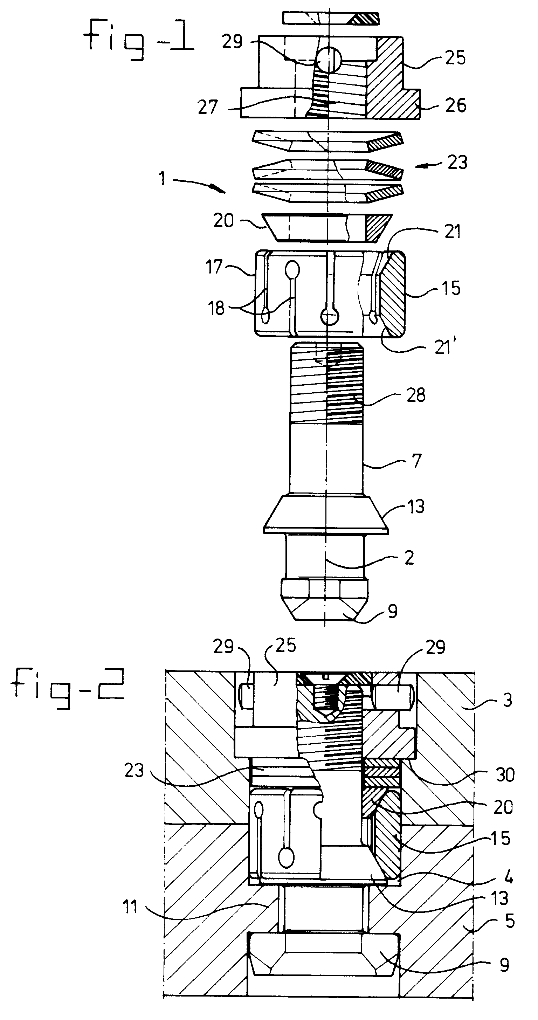

Figure 1 shows an exploded view of a clamping bolt according to the invention, and
Figure 2 shows the clamping bolt according to Figure 1 fixed to a workpiece.

By means of the clamping bolt 1, a tool or a product to be machined, designated by 3, can, as is shown in Figure 2, be positioned accurately in an exact manner with respect to a machine bed 5 of, for example, a milling machine. The clamping bolt 1 comprises a pin 7, which can be placed with a foot 9, which extends radially from the centre line 2 of the pin, into a fixing cavity 4 in the machine bed 5. The fixing cavity 4 in the machine bed 5 comprises a shoulder 11, beneath which the foot 9 can be placed by turning the latter through a quarter turn. The clamping bolt 1 is fixed to the machine bed 5 as a result. The clamping bolt 1 is provided with a clamping face in the form of a conical rim 13 and with a straining ring 15 positioned around the rim 13 such that it is freely rotatable. The straining ring 15 comprises a peripheral wall 17 which is provided with expansion slits 18, and two inner sloping rims 21, 21'.

A conical clamping ring 20 lies with a sloping surface against a sloping top rim 21 of the straining ring 15. A resilient element 23, such as, for example, one or more cupped spring washers 23, is arranged above the clamping ring 20. Above the cupped washers 23 there is a nut 25, which is screwed by means of an internal screw thread 27 onto the top end of the pin 7 and engages on the screw thread 28 of the pin 7. The nut 25 has a clamping rim 26 which extends in the radial direction beyond the peripheral wall 17 of the straining ring 15.

Two fixing pins 29, 30 are connected to the nut 25. The nut 25 can be tightened onto the pin 7 with the aid of a special fixing socket in which receiving slots for the pins 29, 30 are provided. This special fixing socket can also be used to lift the clamping bolt 1, after it has been unscrewed, by the pins 29, 30 out of the machine bed 5.

On tightening the nut 25, the bottom sloping rim 21' of the underside of the straining ring 15 is forced, against the spring pressure of the resilient element 23, over the conical rim 13 of the pin 7, so that the bottom of the straining ring expands in a radial direction. Furthermore, clamping ring 20 is forced into the interior of the straining ring 15 by the spring pressure, such that the top rim 21 of said straining ring is also expanded. As a result, the product to be machined or the tool 3 is positioned in the radial direction with respect to the fixing cavity 4 in the machine bed 5. Because the straining ring 15 is fitted around the central pin 7 with a certain degree of play and is able to tilt at a small angle with respect to the centre line 2, the positioning effect of the straining ring is independent of the position of the centre line 2. As a result, an eccentricity of the centre line 2 also does not have an adverse effect on the positioning accuracy. With this arrangement, the radial force is determined by the spring constant.

On further tightening the nut 25, the clamping rim 26 comes to bear on a shoulder 30 of the product 3 to be machined. As a result said product is fixed against the machine bed 5 with a positive fit.

Although the invention has been described with reference to positioning a tool or workpiece to be machined on a machine bed, the clamping bolt according to the invention can in general be used for accurate positioning of an article on a substrate and can be employed in presses, moulds, injection moulds and the like.

## Claims

1. Clamping bolt (1) having a central pin (7), comprising a conical clamping face (13), a straining ring (15) which is located around the clamping face and has a peripheral wall (17) and an internal sloping surface (21, 21'), which straining ring (15) is movable in the axial direction relative to the central pin (7), a screw thread (28) located at the top of the pin and a nut (25) which interacts with the screw thread, wherein a resilient element (23) is accommodated between the nut (25) and the straining ring (15) and wherein the nut (25) is provided with a clamping rim (26) which extends radially beyond the peripheral wall (17) of the straining ring (15), characterised in that the central pin (7) has a fixing element (9) at the bottom for fixing an article to a substrate, such as a machine bed, a clamping element (20) which is movable in the axial direction of the pin (7) and has a clamping face which converges in the direction of the fixing element (9) towards the centre line (2) of the pin (7) being accommodated between the resilient element (23) and the straining ring (15).

2. Clamping bolt (1) according to Claim 1, characterised in that the fixing element (9) is constructed as a foot which extends radially with respect to the centre line (2) of the pin.

3. Clamping bolt according to Claim 1 or 2, characterised in that the nut (25) is provided with two pins (29, 30) located in the radial direction for engagement on a fixing tool.
